# EUROPEAN PATENT SPECIFICATION

(11) **EP 2 494 168 B1**
(45) Date of publication and mention of the grant of the patent: **02.01.2019**
(21) Application number: 10759768.4
(22) Date of filing: 16.09.2010
(51) Int. Cl.: F02C 6/16, F02C 1/02, F17C 1/00

(54) **SYSTEM FOR CARBON DIOXIDE CAPTURE IN AN AIR COMPRESSION AND EXPANSION SYSTEM**
VORRICHTUNG ZUR ABSCHEIDUNG VOM KOHLENSTOFFDIOXID INNERHALB EINER KOMPRESSION- UND EXPANSIONSANLAGE
SYSTÈME POUR LA CAPTURE DE DIOXYDE DE CARBONE DANS UN SYSTÈME DE COMPRESSION ET DE DÉTENTE D'AIR

(30) Priority: 27.10.2009 US 606478
(43) Date of publication of application: 05.09.2012
(73) Proprietor: General Electric Company, Schenectady, NY 12345 (US)
(72) Inventor: FINKENRATH, Matthias, 85748 Garching B. Muenchen (DE); AST, Gabor, 85748 Garching B. Muenchen (DE); LEHAR, Matthew, 85748 Garching B. Muenchen (DE); FREY, Thomas, 85748 Garching B. Muenchen (DE); DRAPER, Samuel, David, Greenville SC 29615 (US); AUMANN, Richard, 85747 Garching (DE); HOFFMANN, Stephanie, Marie-noelle, 80339 Muenchen (DE)
(74) Representative: Illingworth-Law, William Illingworth
(86) International application number: PCT/US2010/049033
(87) International publication number: WO 2011/056301

(56) References cited:
- WO-A2-2009/070785
- US-A1- 2003 101 728
- US-A1- 2009 158 740
- US-A1- 2009 293 503
- US-A1- 2010 205 960

## Description

### BACKGROUND OF THE INVENTION

Embodiments of the invention relate generally to air compression and expansion systems and, more particularly, to a system and method for carbon dioxide capture in an air compression and expansion system.

Air compression and expansion systems are used in a multitude of industries for a variety of applications. For example, one such application is the use of air compression and expansion systems as the turbomachinery in generating and storing energy. Compressed air energy storage (CAES) systems typically include a compression train having one or more compressors that compress intake air and provide the compressed intake air to a cavern, underground storage, or other compressed air storage component. The compressed air is then later used to drive one or more turbines to produce energy, such as, for example, electrical energy. During operation of the compression stage of a CAES system, the compressed intake air is typically cooled to cavern temperature prior to storage. During operation of the expansion stage, air is discharged from underground storage through turbines and expands such that the air exits the turbines at ambient pressure.

CAES systems are effective contributors to a utility plant's power generation mix as a source of injecting energy into the grid during peak power times, while storing excess energy during off-peak hours. CAES systems may also use energy generated from wind mills to power the compression train while compressed air is delivered to the energy storage cavern or the like.

While CAES systems may improve the efficiency of energy generation and/or provide auxiliary energy to the grid during peak hours, utility plants (e.g., coal and natural gas power plants) generate large amounts of carbon dioxide (CO₂) that contributes to atmospheric greenhouse gases.

US2010/205960 A1 and US 2009/293503 A1 were both published after the claimed priority date of the present application, but before the filing date of the present application, and relate to carbon dioxide capture in air compression and expansion systems. WO 2009/070785 A2 relates to carbon dioxide capture from flue gases. US 2009/158740 A1, which shows the technical features of the preamble of independent claim 1, and US 2003/101728 A1 relate to carbon dioxide capture during compressed air energy storage.
Therefore, it would be desirable to design a system and method that reduce CO₂ contributions from a CAES system implemented in a utility plant.

### BRIEF DESCRIPTION OF THE INVENTION

Embodiments of the invention are directed to a system for carbon dioxide capture in an air compression and expansion system.

Therefore, in accordance with one aspect of the invention, a gas compression and expansion system is defined in claim 1.

In accordance with another aspect of the invention, a compressed air energy storage (CAES) system includes a compressor assembly having an inlet and an outlet, the compressor configured to exhaust compressed working fluid at the outlet of the compressor assembly. The CAES system also includes a storage volume positioned downstream of the outlet of the compressor and configured to receive and store the compressed working fluid, a turbine assembly positioned downstream of the storage volume and configured to receive the compressed working fluid from the storage cavern at an inlet of the turbine assembly and exhaust expanded working fluid at an outlet of the turbine assembly, and a carbon dioxide separation unit positioned downstream of the outlet of the compressor assembly and upstream of the inlet of the turbine assembly, wherein the carbon dioxide separation unit is configured to remove a quantity of carbon dioxide from the compressed working fluid.

Various other features and advantages will be made apparent from the following detailed description and the drawings.

### BRIEF DESCRIPTION OF THE DRAWINGS

The drawings illustrate preferred embodiments presently contemplated for carrying out the invention.

In the drawings:
FIG. 1 is a block diagram of an exemplary CAES system according to an embodiment of the invention.
FIG. 2 is a block diagram of an exemplary CAES system according to another embodiment of the invention.

### DETAILED DESCRIPTION

Embodiments of the invention are described with respect to standard compressed air energy storage (CAES) systems and CAES systems having exhaust gas recirculation. However, it will be appreciated by those skilled in the art that embodiments of the invention are equally applicable for use with other air compression and expansion systems.

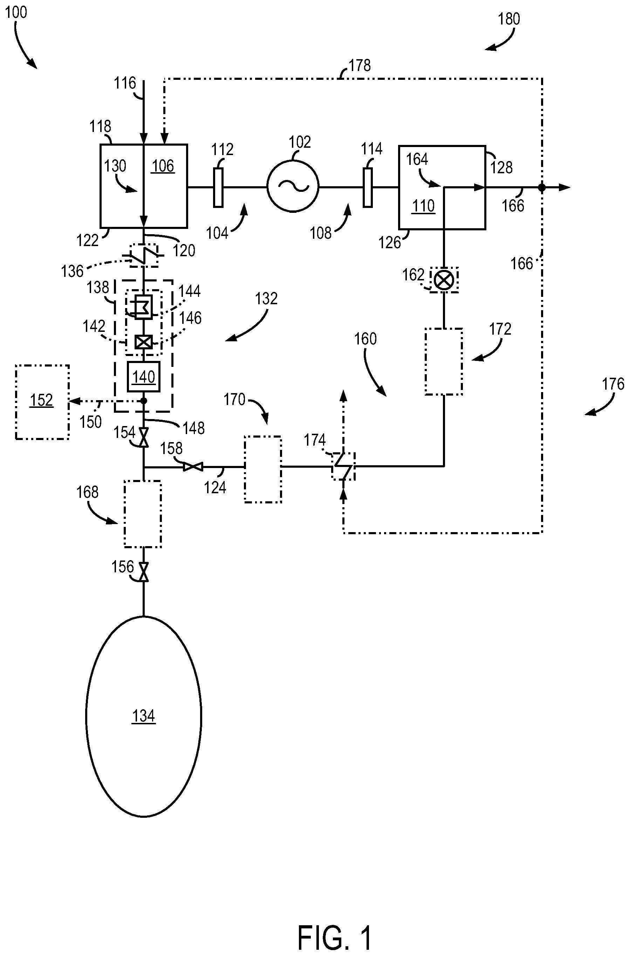

Referring to FIG. 1, a block diagram of an exemplary air compression and expansion system 100, such as, for example, a CAES system, is shown according to an embodiment of the invention. CAES system 100 includes a motor/generator unit 102, a first driving shaft 104 coupled to a compression system 106, and a second driving shaft 108 coupled to an expansion system 110. Clutches 112, 114 selectively disengage motor/generator unit 102 from compression system 106 and expansion system 110, respectively.

According to one embodiment, compression system 106 comprises a single compressor unit configured to receive a working fluid 116 at an inlet side 118 of compression system 106, compress working fluid 116 to a storage pressure (e.g., approximately 50-150 bar), and exhaust a compressed working fluid 120 at an outlet side 122 of compressor system 106. Alternatively, compression system 106 may include a number of compressor units coupled together in series. In this manner, the number of compressor units is configured to compress working fluid 116 from a first pressure to a second pressure in a number of pressure stages, with each of the compressor units configured to compress working fluid 116 to a pressure less than the difference between the first and second pressures. For example, the number of compressor units may be configured to compress working fluid 116 from an ambient pressure to a storage pressure. Likewise, according to one embodiment, expansion system 110 comprises one expander unit or turbine configured to expand a quantity of stored working fluid 124 from a third pressure to a fourth pressure. Alternatively, expansion system 110 may include a number of expander units coupled together in series and configured to operate in a number of pressure stages, with each of the expander units configured to expand stored working fluid 124 by a pressure less than a difference between the third pressure and the fourth pressure. Expansion system 110 is configured to receive the quantity of stored working fluid 124 at an inlet 126 of expansion system 110, expand the stored working fluid 124 to an exhaust pressure (e.g., approximately 1 bar), and exhaust an expanded working fluid 168 at an outlet 128 of expansion system 110.

Working fluid 116 enters CAES system 100 at inlet side 118 of compression system 106 and is compressed by compression system 106 as working fluid 116 travels through a compressor path 130. A compressed working fluid 120 exits outlet side 122 of compressor system 106 and travels along a first path 132 between compression system 106 and a compressed air storage volume 134, such as, for example, a natural cavern or salt cave. As it travels along first path 132, compressed working fluid 120 passes through an optional heat exchanger or aftercooler 136 (shown in phantom) to cool compressed working fluid 120 prior to storage and enters carbon dioxide (CO₂) separation system 138, wherein CO₂ is filtered or separated from compressed working fluid 120. As shown in FIG. 1, CO₂ separation system 138 is positioned within CAES system 100 downstream of compression system 106 and upstream of expansion system 110. CO₂ separation system 138 includes a CO₂ separation unit 140, such as, for example, a solvent-based CO₂ capture unit or a membrane-based CO₂ capture unit. CO₂ separation system 138 also includes an optional treatment system 142, which may contain a trim cooler 144 (shown in phantom) to cool compressed working fluid 120 to a CO₂ separation temperature and/or an optional pre-treatment device 146 (shown in phantom), which may be positioned upstream from CO₂ separation unit 140 to remove particulates from working fluid 116. A CO₂-lean or CO₂-free working fluid 148 exits CO₂ separation system 138 and is stored in compressed air storage volume 134. According to one embodiment, separated CO₂ 150 may be directed to an optional CO₂ storage system 152 (shown in phantom).

Because working fluid 116 is compressed prior to passing through CO₂ separation unit 140, the CO₂ partial pressure of working fluid 116 is increased, thereby substantially increasing the driving force for CO₂ separation. Also, because the volume of working fluid 116 passing through CO₂ separation system 138 is reduced via compression, a smaller CO₂ separation unit may be incorporated in CAES system 100, thereby reducing equipment costs.

A number of valves 154, 156, 158 are positioned between compression system 106, expansion system 110, and compressed air storage volume 134 to control movement of fluid throughout CAES system 100. For example, when valve 154 is closed, valves 156, 158 may be opened to direct a quantity of stored working fluid 124 along a second path 160 between compressed air storage volume 134 and expansion system 110. As it travels along second path 160, the quantity of stored working fluid 124 may pass though an optional combustor 162 (shown in phantom). Stored working fluid 124 enters at inlet 126 of expansion system 110 and is expanded by expansion system 110 as the stored working fluid 124 travels though an expansion path 164. Expanded working fluid 166 exits CAES system 100 at outlet 128 of expansion system 110.

Also, as shown in FIG. 1, according to one embodiment, CO₂ separation system 138 is fluidly coupled along first path 132 between compression system 106 and compressed air storage volume 134 as described above. According to other embodiments, CO₂ separation system 138 may be positioned at various alternative locations within CAES system 100, such as, for example, any of locations 168, 170, and 172 (shown in phantom). One skilled in the art will recognize that CO₂ separation system 138 may be positioned at other locations as well, such as a position upstream of combustor 162 and downstream of expansion system 110, or at a position between valve 156 and compressed air storage volume 134, for example.

According to an embodiment of the invention, CAES system 100 may be optionally configured with a heat exchanger 174 (shown in phantom) to preheat the stored working fluid 124 before it is expanded in expansion system 110. In such an embodiment, all or a portion of expanded working fluid 166 is directed along path 176 such that it passes through heat exchanger 174.

In one embodiment, working fluid 116 is ambient air having a CO₂ concentration of approximately 400 ppmv, for example. In such an embodiment, compression system 106 may be configured to compress working fluid 116 to a storage pressure of 100 bar, for example, such that compressed working fluid 120 has a CO₂ partial pressure of approximately 0.04 bar at separation.

The working fluid 116 is flue gas exhausted from a power plant or industrial process, for example, having a percent volume of CO₂ of approximately 3-30%. For example, working fluid 116 may be flue gas exhausted from a pulverized coal power plant having a CO₂ concentration of approximately fifteen (15) percent volume. In this embodiment, compressed working fluid 120 may have a storage pressure of 100 bar and a corresponding CO₂ partial pressure of approximately fifteen (15) bar at separation. As another example, working fluid 116 may be flue gas exhausted from a natural gas combined cycle having a CO₂ concentration of approximately four (4) percent volume. In this embodiment, compressed working fluid 120 may be compressed to a storage pressure of 100 bar and have a CO₂ partial pressure of approximately eight (8) bar at separation.

For CAES systems that include co-firing upstream of the expansion system (e.g., natural gas power plants), a portion of the exhausted expanded working fluid leaving the expansion system is recirculated back to the compressor, according to embodiments of the invention. According to the invention, recirculated exhaust gas or recirculated fluid 178 (shown in phantom) comprising a fraction (e.g., up to 50%) of expanded working fluid 166 is directed along a recirculation path 180 between outlet side 128 of expansion system 110 and inlet side 118 of compression system 106. Recirculated fluid 178 is mixed with working fluid 116 at inlet side 118 of compression system 106. As a result, the CO₂ concentration in compressed working fluid 120 is increased, thereby increasing CO₂ partial pressure and making CO₂ separation easier. Working fluid 116 may enter compression system 106 in a smaller inlet stream in embodiments that incorporate recirculated exhaust fluid 178 than those embodiments that do not.

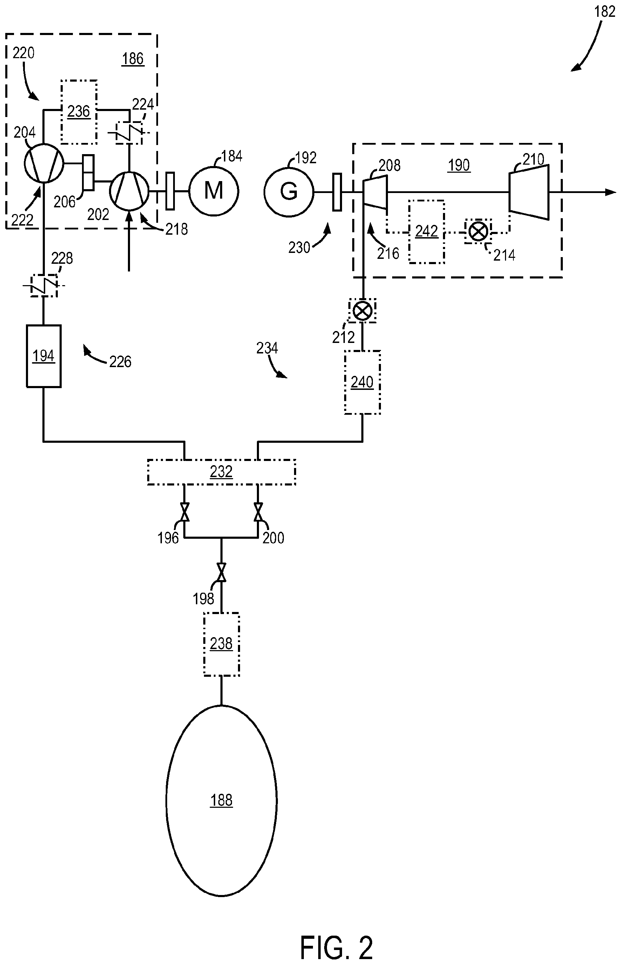

Referring now to FIG. 2, a block diagram of a CAES system 182 is shown according to an embodiment of the invention. CAES system 182 includes a motor 184 coupled to a compressor system 186, a storage cavern 188, a turbine system 190 coupled to a generator 192, and a CO₂ separation system 194, such as, for example, CO₂ separation system 152 (FIG. 1). CAES system 182 also includes a number of valves 196, 198, 200 that may be manipulated to control the movement of gas to and from storage cavern 188.

As shown in FIG. 2, compressor system 186 includes a first compressor 202 and a second compressor 204 with a gearbox 206 therebetween. First Turbine system 190 includes a first turbine 208 and a second turbine 210. Optional combustors 212, 214 (shown in phantom) may be positioned at locations at an inlet side inlet 216 of first turbine 208 and/or between first and second turbines 208, 210, as shown. Although only two compressors 202, 204 are shown in the present embodiment, it is contemplated that compression system 186 may include more than two compressors. Similarly, turbine system 190 may include more than two turbines.

Gas enters compressor system 186 at an inlet 218 of first compressor 202, travels through compression path 220, and exits compressor system 186 at an outlet 222 of second compressor 204. Gas is compressed to an intermediate pressure as it passes through first compressor 202, and is compressed to a final storage pressure as it passes through second compressor 204. An optional cooling unit 224 (shown in phantom) may be positioned between first and second compressors 202, 204 to pre-cool the gas prior to compression in second compressor 204.

After exiting compressor system 186, gas travels along a compressed gas path 226 formed between compressor system 186 and storage cavern 188. CO₂ separation system 194 filters CO₂ from the gas as the gas travels along compressed air path 226, in a similar manner as described with respect to CO₂ separation system 138 of FIG. 1.

According to one embodiment, before the compressed gas is stored in cavern 188, it may pass through an optional cooling unit 228 (shown in phantom), which removes heat from the compressed air prior to storage in cavern 188. By removing heat from the compressed gas prior to storage, the integrity of cavern 188 may be protected. Although cooling unit 228 is shown upstream of CO₂ separation system 194, alternatively, cooling unit 228 may be positioned downstream of CO₂ separation system 194.

After being stored in cavern 188, compressed gas may travel along exit path 236 to turbine system 190. Alternatively, valves 196-200 may be manipulated to allow compressed gas to travel directly from compression system 186 to turbine system 190 without intermediate storage in cavern 188. Due to the configuration of turbine system 190, the compressed gas is allowed to expand as it passes therethrough, thereby causing rotation of turbine system 190. Gas is expanded to an intermediate expansion pressure as it passes through first turbine 208, and is further expanded to ambient pressure as it passes through second turbine 210. The rotation of turbine system 190 causes a drive shaft 230 connected to generator unit 192 to rotate, causing generator unit 192 to produce electricity.

According to one embodiment of the invention, CAES system 182 may optionally include a thermal energy storage (TES) unit 232 (shown in phantom). In such an embodiment, compressed gas passing along compressed air path 226 towards storage cavern 188 passes through TES unit 232, which removes heat from the compressed gas. The heat is stored by TES unit 232 and is later conveyed back to the compressed gas as the compressed gas passes back through TES unit 232 as the gas travels along an exit path 234 formed between storage cavern 188 and turbine system 190.

Although CO₂ separation system 194 is shown in FIG. 2 at a position downstream of compressor system 186 and upstream of storage cavern 188, one skilled in the art will appreciate that CO₂ separation system 194 may be positioned at any position downstream of first compressor 202 and upstream of second turbine 210. Thus, according to various embodiments, CO₂ separation system 194 may be positioned at any of locations 236, 238, 240, 242 (shown in phantom), for example.

Therefore, in accordance with one embodiment, a gas compression and expansion system includes a compression system fluidly coupled to a storage compartment and configured to compress a first quantity of gas for storage in the storage compartment, the compression system including a compression path configured to convey the first quantity of gas therethrough. The gas compression and expansion system also includes an expansion system fluidly coupled to the storage compartment and configured to expand a second quantity of gas from the storage compartment, the expansion system including an expansion path configured to convey the second quantity of gas therethrough. Further, the gas compression and expansion system includes a first path fluidly coupled to the compression path and configured to convey the first quantity of gas to the storage compartment, a second path fluidly coupled to the expansion path and configured to convey the second quantity of gas from the storage compartment to the expansion system, and a carbon dioxide separation unit fluidly coupled to one of the first path, the second path, the compression path, and the expansion path, wherein the carbon dioxide separation unit is configured to remove a quantity of carbon dioxide from one of the first quantity of gas and the second quantity of gas.

In accordance with another embodiment not part of the invention, a method of manufacturing an air compression and expansion system includes configuring a compressor to compress an airstream for storage in a storage volume, coupling a first airflow path to the compressor and configuring the first airflow path to deliver a compressed airstream to the storage volume, and configuring a turbine to receive a quantity of the compressed airstream and expand the quantity of the compressed airstream. The method also includes coupling a second airflow path to the turbine and configuring the second airflow path to deliver the quantity of the compressed airstream to the turbine from the storage volume and coupling a carbon dioxide filter along at least one of the first airflow path and the second airflow path and configuring the carbon dioxide filter to filter a quantity of carbon dioxide from the compressed airstream.

In accordance with yet another embodiment, a compressed air energy storage (CAES) system includes a compressor assembly having an inlet and an outlet, the compressor configured to exhaust compressed working fluid at the outlet of the compressor assembly. The CAES system also includes a storage volume positioned downstream of the outlet of the compressor and configured to receive and store the compressed working fluid, a turbine assembly positioned downstream of the storage volume and configured to receive the compressed working fluid from the storage cavern at an inlet of the turbine assembly and exhaust expanded working fluid at an outlet of the turbine assembly, and a carbon dioxide separation unit positioned downstream of the outlet of the compressor assembly and upstream of the inlet of the turbine assembly, wherein the carbon dioxide separation unit is configured to remove a quantity of carbon dioxide from the compressed working fluid.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A compressed air energy storage system comprising:
a compression system (106) fluidly coupled to a storage compartment (134) and configured to compress a first quantity of gas for storage in the storage compartment, the compression system comprising a compression path (130) configured to convey the first quantity of gas therethrough;
an expansion system (110) fluidly coupled to the storage compartment (134) and configured to expand a second quantity of compressed gas from the storage compartment, the expansion system comprising an expansion path (164) configured to convey the second quantity of gas therethrough;
a first path (132) fluidly coupled to the compression path (130) and configured to convey the first quantity of compressed gas to the storage compartment (134);
a second path (160) fluidly coupled to the expansion path (164) and configured to convey the second quantity of compressed gas from the storage compartment (134) to the expansion system (110); and
a carbon dioxide separation unit (138) fluidly coupled to one of the first path (132), the second path (160), the compression path (130), and the expansion path (164), wherein the carbon dioxide separation unit is configured to remove a quantity of carbon dioxide from one of the first quantity of compressed gas and the second quantity of compressed gas;
wherein the expansion system (110) is configured to decrease a pressure of the second quantity of compressed gas to ambient pressure, the expansion system comprising a plurality of expander units (208, 210) fluidly coupled to the expansion path (164); and
wherein each expander unit is configured to decrease the pressure of the second quantity of compressed gas by a respective pressure less than a difference between the pressure of the compressed gas and ambient pressure the compressed air energy storage system being **characterised in that** the first quantity of gas comprises flue gas; and the compressed air energy storage system further comprises a third path (180) fluidly coupled to the expansion system (110) and to the compression system (106), the third path configured to convey a quantity of carbon dioxide-enriched gas from the expansion system to the compression system.

2. The system of claim 1 wherein the carbon dioxide separation unit (138) comprises one of a solvent-based separation unit and a membrane-based separation unit.

3. The system of claim 1 wherein the compression system (106) is configured to increase a pressure of the first quantity of gas from a first pressure to a second pressure, the compression system comprising a plurality of compressor units fluidly coupled to the compression path (130); and
wherein each compressor unit is configured to increase the pressure of the first quantity of gas by a respective pressure less than a difference between the first and second pressures.

4. The system of claim 1 wherein the storage compartment (134) comprises a cavern.

## Patentansprüche

1. Druckluftenergiespeichersystem, umfassend:
ein Verdichtungssystem (106), das strömungstechnisch mit einem Speicherabschnitt (134) gekoppelt ist und konfiguriert ist, eine erste Quantität von Gas zum Speichern im Speicherabschnitt zu verdichten, das Verdichtungssystem umfassend einen Verdichtungspfad (130), der konfiguriert ist, die erste Quantität von Gas hindurch zu befördern;
ein Ausdehnungssystem (110), das strömungstechnisch mit dem Speicherabschnitt (134) gekoppelt ist und konfiguriert ist, eine zweite Quantität von verdichtetem Gas vom Speicherabschnitt auszudehnen, das Ausdehnungssystem umfassend einen Ausdehnungspfad (164), der konfiguriert ist, die zweite Quantität von Gas hindurch zu befördern;
einen ersten Pfad (132), der strömungstechnisch mit dem Verdichtungspfad (130) gekoppelt ist und konfiguriert ist, die erste Quantität von verdichtetem Gas zum Speicherabschnitt (134) zu befördern;
einen zweiten Pfad (160), der strömungstechnisch mit dem Ausdehnungspfad (164) gekoppelt ist und konfiguriert ist, die zweite Quantität von verdichtetem Gas vom Speicherabschnitt (134) zum Ausdehnungssystem (110) zu befördern; und
eine Kohlendioxidtrennungseinheit (138), die strömungstechnisch mit einem des ersten Pfads (132), des zweiten Pfads (160), des Verdichtungspfads (130) und des Ausdehnungspfads (164) gekoppelt ist, wobei die Kohlendioxidtrennungseinheit konfiguriert ist, eine Quantität von Kohlendioxid von einer der ersten Quantität von verdichtetem Gas und der zweiten Quantität von verdichtetem Gas zu entfernen;
wobei das Ausdehnungssystem (110) konfiguriert ist, einen Druck der zweiten Quantität von verdichtetem Gas auf Umgebungsdruck zu verringern, das Ausdehnungssystem umfassend eine Vielzahl von Expandereinheiten (208, 210), die strömungstechnisch mit dem Ausdehnungspfad (164) gekoppelt sind; und
wobei jede Expandereinheit konfiguriert ist, den Druck der zweiten Quantität von verdichtetem Gas um einen jeweiligen Druck, geringer als eine Differenz zwischen dem Druck des verdichteten Gas und Umgebungsdruck, zu verringern,
wobei das Druckluftenergiespeichersystem **dadurch gekennzeichnet ist, dass**
die erste Quantität von Gas Abgas umfasst; und das Druckluftenergiespeichersystem weiter einen dritten Pfad (180) umfasst, der strömungstechnisch mit dem Ausdehnungssystem (110) und dem Verdichtungssystem (106) gekoppelt ist, wobei der dritte Pfad konfiguriert ist, eine Quantität von kohlendioxidangereichertem Gas vom Ausdehnungssystem zum Verdichtungssystem zu befördern.

2. System nach Anspruch 1, wobei die Kohlendioxidtrennungseinheit (138) eine von einer lösemittelbasierten Trennungseinheit und einer membranbasierten Trennungseinheit umfasst.

3. System nach Anspruch 1, wobei das Verdichtungssystem (106) konfiguriert ist, einen Druck der ersten Quantität von Gas von einem ersten Druck zu einem zweiten Druck zu erhöhen, das Verdichtungssystem umfassend eine Vielzahl von Verdichtereinheiten, die strömungstechnisch mit dem Verdichtungspfad (130) gekoppelt sind; und
wobei jede Verdichtereinheit konfiguriert ist, den Druck der ersten Quantität von Gas um einen jeweiligen Druck, geringer als eine Differenz zwischen dem ersten und zweiten Druck, zu erhöhen.

4. System nach Anspruch 1, wobei der Speicherabschnitt (134) einen Hohlraum umfasst.

## Revendications

1. Système de stockage d'énergie à air comprimé comprenant :
un système de compression (106) couplé à fluide à un compartiment de stockage (134) et configuré pour comprimer une première quantité de gaz pour stockage dans le compartiment de stockage, le système de compression comprenant un chemin de compression (130) configuré pour transporter la première quantité de gaz à travers ce dernier ;
un système de détente (110) couplé à fluide au compartiment de stockage (134) et configuré pour détendre une seconde quantité de gaz comprimé en provenance du compartiment de stockage, le système de détente comprenant un chemin de détente (164) configuré pour transporter la seconde quantité de gaz à travers ce dernier ;
un premier chemin (132) couplé à fluide au chemin de compression (130) et configuré pour transporter la première quantité de gaz comprimé jusqu'au compartiment de stockage (134) ;
un deuxième chemin (160) couplé à fluide au chemin de détente (164) et configuré pour transporter la seconde quantité de gaz comprimé depuis le compartiment de stockage (134) jusqu'au système de détente (110) ; et
une unité de séparation de dioxyde de carbone (138) couplée à fluide à l'un du premier chemin (132), du deuxième chemin (160), du chemin de compression (130) et du chemin de détente (164), dans lequel l'unité de séparation de dioxyde de carbone est configurée pour enlever une quantité de dioxyde de carbone depuis l'une de la première quantité de gaz comprimé et de la seconde quantité de gaz comprimé ;
dans lequel le système de détente (110) est configuré pour diminuer une pression de la seconde quantité de gaz comprimé jusqu'à la pression ambiante, le système de détente comprenant une pluralité d'unités de détente (208, 210) couplées à fluide au chemin de détente (164) ; et
dans lequel chaque unité de détente est configurée pour diminuer la pression de la seconde quantité de gaz comprimé par une pression respective inférieure à une différence entre la pression du gaz comprimé et la pression ambiante
le système de stockage d'énergie à air comprimé étant **caractérisé en ce que**
la première quantité de gaz comprend des gaz brûlés ; et le système de stockage d'énergie à air comprimé comprend en outre un troisième chemin (180) couplé à fluide au système de détente (110) et au système de compression (106), le troisième chemin étant configuré pour transporter une quantité de gaz enrichi en dioxyde de carbone depuis le système de détente jusqu'au système de compression.

2. Système selon la revendication 1, dans lequel l'unité de séparation de dioxyde de carbone (138) comprend l'une d'une unité de séparation à base de solvant et d'une unité de séparation à base de membrane.

3. Système selon la revendication 1, dans lequel le système de compression (106) est configuré pour augmenter une pression de la première quantité de gaz depuis une première pression jusqu'à une seconde pression, le système de compression comprenant une pluralité d'unités de compression couplées à fluide au chemin de compression (130) ; et
dans lequel chaque unité de compression est configurée pour augmenter la pression de la première quantité de gaz par une pression respective inférieure à une différence entre les première et seconde pressions.

4. Système selon la revendication 1, dans lequel le compartiment de stockage (134) comprend une caverne.
